# EUROPEAN PATENT SPECIFICATION

(11) **EP 2 371 206 B1**
(45) Date of publication and mention of the grant of the patent: **17.04.2013**
(21) Application number: 11163911.8
(22) Date of filing: 05.12.2008
(51) Int. Cl.: A01G 9/10

(54) **Device for manufacturing press pots**
Vorrichtung zur Herstellung von Topfpressen
Dispositif pour la fabrication de pots de terreau comprimé

(30) Priority: 12.12.2007 NL 1034818
(43) Date of publication of application: 05.10.2011
(62) Divisional of application: 08829953.2
(73) Proprietor: Visser 's-Gravendeel Holding B.V., 3295 KH 's-Gravendeel (NL)
(72) Inventor: Visser, Anthony, 3295 CT, 's-Gravendeel (NL)
(74) Representative: Grootscholten, Johannes A.M.

(56) References cited:
- DE-B- 1 273 894
- FR-A- 2 624 340

## Description

The present invention relates to a device for manufacturing press pots, as known from DE-1273894, which constitutes the closest prior art in relation to the present invention, the features of which are defined in the precharacterizing portion of the appended independent claim.

Problems with the prior art relate to layer structures occurring in the potting compost in the press pots. Manual intervention is thus still always required.

The present invention has for its object to obviate or at least alleviate the problems of the known art, for which purpose a device according to the present invention is distinguished by the features defined in the appended independent claim. According to the invention, press pots can thus be formed or cut with larger dimensions than those of the container. It has been found that particularly press pots formed or cut on the outer side of the conveyor have a structure differing from that of the press pots more toward the inner side of the conveyor, and are thus more likely to fall apart. In particular these outer rows of potting compost for pressed pots have a more layered structure and are thus prone to disintegration. The cause of this phenomenon is perhaps the design of the knife or the knives or the structure of a layer of potting compost presented on the conveyor for cutting and forming of press pots there from. The cause may also lie in walls disposed for the purpose of guiding a layer or flow of potting compost and against which the potting compost scrapes, as a result of which the structure becomes such that press pots formed or cut here are more likely to fall apart. Whatever the background to this may be, by giving the knife or the knives, and also the conveyor, dimensions which are larger than the dimensions of the container or crate in which the press pots must be placed, on at least one outer edge of each assembly of press pots to be formed one or more than one row can be discarded, i.e. disregarded in terms of which rows are placed in the container or crate. The potting compost in the remaining row or rows, which fall away, are returned to the side close to or at the feed via the feedback, and this potting compost can still be utilized for cutting or forming of usable rows for placing in the containers or crates. It can be favorable here for the knife to comprise longitudinal and transverse cutters to be selectively actuated, which in the actuated state form rows of press pots in the direction of transport of the conveyor. The rows can however also be formed and/or defined in an orientation transversely thereof. The outer row (or rows) at a side in the direction of transport can then be disregarded and even be returned. Additionally or alternatively, larger dimensions of the knife can also correspond to the dimensions of at least one row of pot forms in the container. One row would then correspond to disregarding thereof on one side, although in an additional or alternative embodiment the larger dimensions of the knife can correspond to at least two rows, and the relevant rows lie outside the reach of gripping means for gripping cut pot forms and transferring thereof into the container. The rows are then preferably located opposite each other in order that it is precisely these rows, which may possibly comprise a layered structure, which with some measure of certainty are not placed in the containers or crates, wherein it is desirable not to transfer into the crates or containers precisely the press pots in those rows which may comprise a layered structure. The feature can then again preferably be realized that the device comprises a feedback from or from behind the knife in the direction of transport to the feed, for the purpose of renewed use at the feed of the potting compost forming part of the at least one row outside the size of the container. The transporting device is then the medium along which the potting compost in the row or rows cut with the knife or knives on the outer side of an assembly of press pots not intended for a container or crate is carried back to the feed side of the device, which can again take place in an automated process.

Features according to the other independent claims which can be deemed as dependent and independent (partial) solutions here also contribute toward providing the whole solution.

In a preferred embodiment the device has the feature that the pressing means and the knife form a unit at a single position along the conveyor. A further simplification can thus be realized compared to a configuration with separate pressing means and a knife, although such separate pressing means and a knife are not precluded from the protection of the present invention.

In another preferred embodiment the device has the feature that gripping means connect to the conveyor which can be selectively set into operation and which grip and transfer the cut pot forms into a container intended for this purpose. Such gripping means can be well synchronized with the pressing means and the knife, and also with the throughput speed of potting compost transported by the conveyor past the pressing means and the knife to the gripping means. The device according to the present invention can have the feature here that it comprises: a supply for providing empty containers at the gripping means; and a discharge for discharging containers filled with pot forms from the gripping means. A device which forms a unit to an even greater extent is thus provided with as many functional components as possible which can be automated and which can together supply containers or crates with press pots.

In another preferred embodiment the device has the feature that the conveyor comprises a conveyor belt trained in an endless loop round reversing wheels, wherein a drive motor is coupled to a reversing wheel of the conveyor the furthest removed from the feed. A configuration is hereby realized which pulls the feed side of the conveyor belt trained in an endless loop through the conveyor and thus the frame, whereby a more uniform progression of the belt can be brought about than if a driven reversing wheel pulls on the feedback side of the belt on the side opposite the feed.

In a very favorable embodiment the drive motor is connected, via a ratchet wheel for stepwise advancing of the conveyor, to at least one of the reversing wheels of the conveyor, in particular - though not exclusively - the reversing wheel of the conveyor located furthest from the feed. A ratchet wheel can be very readily used to effect a stroke of the driven reversing wheel through an angular distance, then to be returned to a starting position for driving. The angular distance can be selected and/or set so as to correspond with the distance on the conveyor at which rows of press pots have been or are being formed, and the angular distance corresponding to this distance on the conveyor can thus be selected to correspond to the dimensions along the advancing direction of the conveyor subject to those press pots to be cut with a chosen knife or set of knives.

In another preferred embodiment the device has the feature that at least the knife is received in a cassette releasable from the frame. It is thus possible to opt for a cassette for forming or cutting press pots of desired dimensions and fitting into a container or crate of pre-known dimensions which can essentially also vary per se. It can be favorable here that at least one of a number of cassettes can be arranged on the frame by means of releasable couplings. The associated knife (or knives) can here be designed for the purpose of cutting the press pots into desired dimensions from a layer of potting compost on the conveyor. Exchanging cassettes then requires no, or at least fewer, alignment and adjustment operations, because the setting and/or alignment of the knife or knives per cassette is already correct, and the cassette must be mounted on or to clearly defined support points. Additionally or alternatively, it can be favorable here when at least the pressing means are also arranged in the cassette. This has the same advantages for alignment and positioning thereof as for placing of the knife (or knives), and it is also the case for the pressing means and the knife that this is also favorable for the dimensioning of the assemblies of press pots to be formed or cut. It can further be favorable when the device comprises a knife drive for the knife which is associated via a releasable coupling with the knife. The cassette can be placed very precisely and accurately relative to the frame, and the knife therein is also positioned fixedly relative to the cassette itself. In order to now avoid a drive for an associated knife having to be arranged in each cassette, it is then favorable when the knife drive is mounted semi-permanently on the frame. Using the coupling between the knife drive and the knife the drive can then be arranged on the frame of the device, and the cassettes with desired knife configurations remain selectable as desired or required without each cassette having to be provided with its own knife drive, whereby the costs of the cassettes and the system as a whole can be minimized. It is also possible here for a transmission to be arranged between the knife and the knife drive with synchronizing means for adjusting the movements of the conveyor and the knife or knives relative to the potting compost. These synchronizing means can comprise and actuation or control of a motor for driving the knife or knives for the purpose of setting the knives into operation at desired points in time subject to the forward movement of the conveyor and the dimensions of the press pots formed or cut with the knife. This can include a detection mechanism or electronic alternative with which the motor fixedly arranged on the frame can be activated. In a specific embodiment use can be made of a hydraulic or pneumatic cylinder as motor or as knife drive. Such a knife drive is easy to actuate, certainly in response to a detected position of the conveyor. This detection can otherwise take place on or at a drive of the conveyor. In an embodiment wherein a movement of a motor is converted into steps, for instance with a ratchet wheel, or when a stepping motor is used, such a manner of synchronizing the knives can be realized in very favorable and mutually corresponding manner.

The invention will be described in more detail herein below on the basis of the accompanying figures, which show a non-limitative example of a device as embodiment of the present invention, wherein the same parts, components and aspects are designated with the same reference numerals, and in which:
fig. 1 is a perspective view of a part of a device according to the present invention;
fig. 2 shows in more detail a part of the device of fig. 1 designated with 2;
fig. 3, 4 and 5 show the operation of the part shown in fig. 2;
fig. 6 shows an alternative embodiment to that shown in the foregoing figures; and
fig. / shows a schematic representation of another aspect of the present invention.

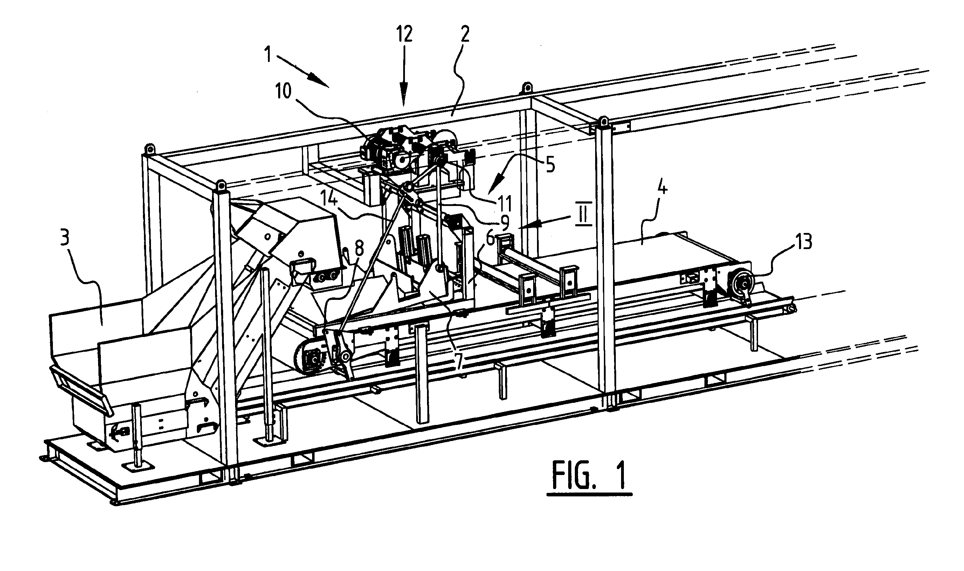

Fig. 1 shows a device 1 according to the present invention. Device 1 comprises a frame 2 in which a number of components and elements and aspects and properties are arranged and implemented as will be discussed below. On the left-hand side in fig. 1 is arranged a feed 3 for providing potting compost to frame 2. This feeds potting compost deposited therein to a conveyor in the form of conveyor belt 4. A replaceable module 5 is mounted releasably on frame 2 on or above conveyor belt 4. Module 5 comprises a sub-frame 6 to be attached to frame 2. A U-frame 7 is arranged hingedly or hingeably in sub-frame 6. U-frame 7 is held in sub-frame 6 for pivoting about tilting point 8. The free end of U-frame 7 is suspended from a drive rod 9, the end of which opposite U-frame 7 is coupled to a motor 10, for which purpose an eccentric transmission 11 is applied. A rotating movement generated by motor 10 is converted by the eccentric transmission in combination with drive rod 9 into an up and downward movement of U-frame 7. As will be further described below, the pre-tamping, cutting, leveling and post-tamping are hereby realized, and it is also possible to provide for pressing in of seeds or forming of cavities (not shown) in the press pots for forming.

It is noted that motor 10 is also coupled via a transmission 12 and eccentric transmission 11 to a ratchet drive element 13 which acts on conveyor belt 4. The ratchet drive element 13 is arranged on the front side opposite feed 3. Use is preferably made here of a system of rods for transmission to a ratchet drive element 13 on the front side remote from the feed, and still more preferably at the reversing wheel at that location around which conveyor belt 4 is trained. A pulling action can thus be performed on conveyor belt 4. A pulling action is preferable to a pushing action on conveyor belt 4 in order to bring about a uniform through feed of potting compost over conveyor belt 4.

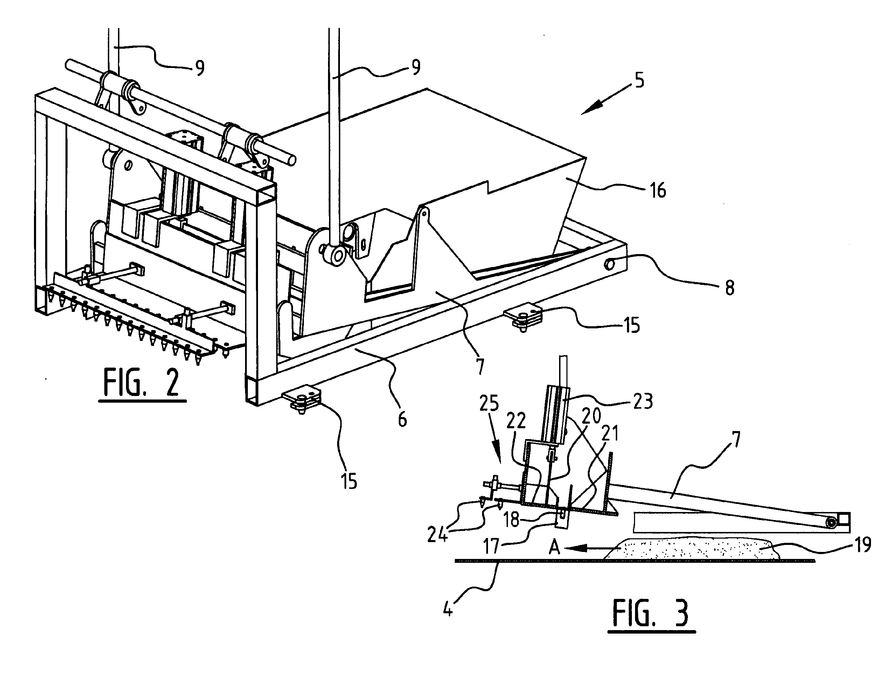

A ratchet drive element 13 has the advantage that a very simple rod driving can be applied which can likewise be coupled to eccentric transmission 11, just as drive rod 9 for U-frame 7. A reciprocal, substantially linear movement of the drive rod coupled to the ratchet drive element suffices to displace the conveyor belt each time through a distance determined by ratchet drive element 13. This distance preferably corresponds to the length of the press pots to be formed in the direction of transport over conveyor belt 4, which will be further described below. It is at least desirable that the distance is no greater than the width of short knives 17, for instance in the view of figure 3, in order to achieve that the cuts in the layer of potting compost 19 made by knives 17 connect to each other. As alternative to a ratchet drive element 13, use can also be made of a stepping motor or an intermittently driven regular motor, although such a drive based on a ratchet has evident advantages in respect of the plurality of stepwise transport movements of conveyor belt 4 and the wear which the use of stepping motors or intermittently driven regular motors can involve.

Drive rod 14 between on one side the motor 10 and transmission 12 and on the other the ratchet drive element 13 is arranged fixedly. When it is desired to produce other sizes of press pot, module 5 is replaced with other cutting knives, which is further elucidated herein below. However, in order to adjust the advance of a layer of potting compost on conveyor belt 4 to, and synchronize it with, the length in the direction of movement of the press pots to be formed or cut, the drive of the motor, when it acts on ratchet drive element 13, must be set with transmission 12 to one of a number of possible transmission ratios. The transmission can be realized in various ways for this purpose. Transmission 12 can be switched in mechanical manner between a number of transmission ratios implemented therein. A separate motor can also be applied to drive the conveyor belt, although this involves an increase in the complexity of the overall device 1 which, with a single motor 10 and a transmission 12 for drive rod 14 on the one hand and a simultaneous transmission via drive rod 9 on U-frame 7, takes a very simple form. Fig. 2 shows module 5. As stated, module 5 is replaceable when it is necessary to begin producing other sizes of press pot. Module 5 is provided for this purpose with suspension points 15 which can be aligned very precisely with corresponding suspension points in frame 2 in order to bring about an accurate positioning and alignment of module 5 relative to the conveyor belt. U-frame 7 is suspended hingedly on shaft 8 in sub-frame 6 and, as already noted above, the up and downward movement of U-frame 7 is generated via drive rods 9. Arranged on U-frame 7 is a bin 16 into which feed 3 deposits potting compost. The potting compost deposited into bin 16 is carried along by the conveyor belt to the left in fig. 2 under module 5. This is shown for instance in fig. 3 and indicated with arrow A. As the potting compost is displaced to the left on conveyor belt 4 in the direction of arrow A in fig. 3, U-frame 7 is moved downward by drive rod 9. A succession of short knives 17 placed in parallel with pins 18 there between herein descends to respectively divide the potting compost into segments and create cavities there between. Knives 17 extend as plate-like elements in the direction of movement of arrow A. A knife 20 movable up and downward relative to U-frame 7 is arranged a short distance behind the short knives 17 on U-frame /. Knife 20 is arranged a short distance behind short knives 17 in the direction of movement of arrow A. Once the short knives 17 have come to lie on conveyor belt 4, a cylinder 21, for instance a pneumatic cylinder 21, is actuated in order to press knife 20 downward into the layer of potting compost 19.

A pre-tamping surface 21 is realized to the side of short knives 17. At each downward stroke of U-frame 7 the layer of potting compost 19 is compressed under pre-tamping element 21. A post-tamping surface 22 is formed behind short knives 17 and preferably also behind the wide long knife 21. Short knives 17 can for instance be arranged on a plate which forms both pre-tamping surfaces 21 and post-tamping surfaces 22. The wide knife 20 can then be driven downward and upward by cylinder 23 through a recess or slot in the post-tamping surface.

In the line of the pre-tamping surfaces and post-tamping surfaces 21, 22 protrusions 24 can further be arranged at an adjustable distance in order to deepen the cavities formed by pins 18, to press seeds therein or to fulfill another function. For the adjustable distance between rows of protrusions 24 use can be made of an adjusting mechanism 25 with which the intermediate distance between each of the two rows of protrusions 24 can be adjusted.

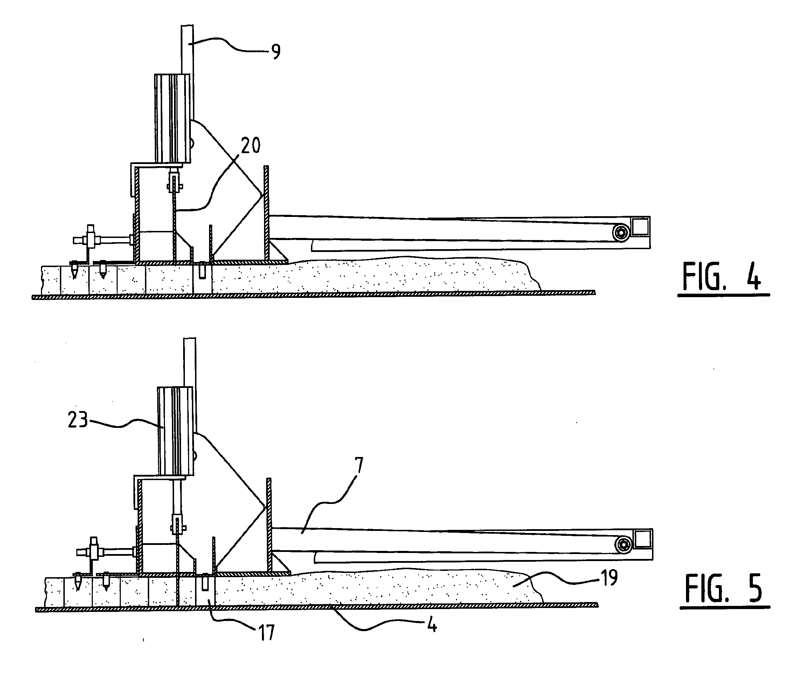

Fig. 4 shows how U-frame 7 is pressed downward onto the layer of potting compost with the long wide knife 20 in a retracted position, and fig. 5 shows how the long wide knife 20 is then pressed downward by the action of the preferably pneumatic cylinder 23. The distance between short knives 17 and the long wide knife 20 is not characteristic here for a specific embodiment of the invention. The long wide knife 20 is preferably placed closely behind short knives 17. Once the position of fig. 5 has been reached, the long wide knife 20 is retracted again by cylinder 23 and short knives 17 are only retracted thereafter or simultaneously with the whole U-frame 7 on drive rod 9. It is also possible to first pull up the whole U-frame 7 and only then to retract the wide long knife 20 in U-frame 7.

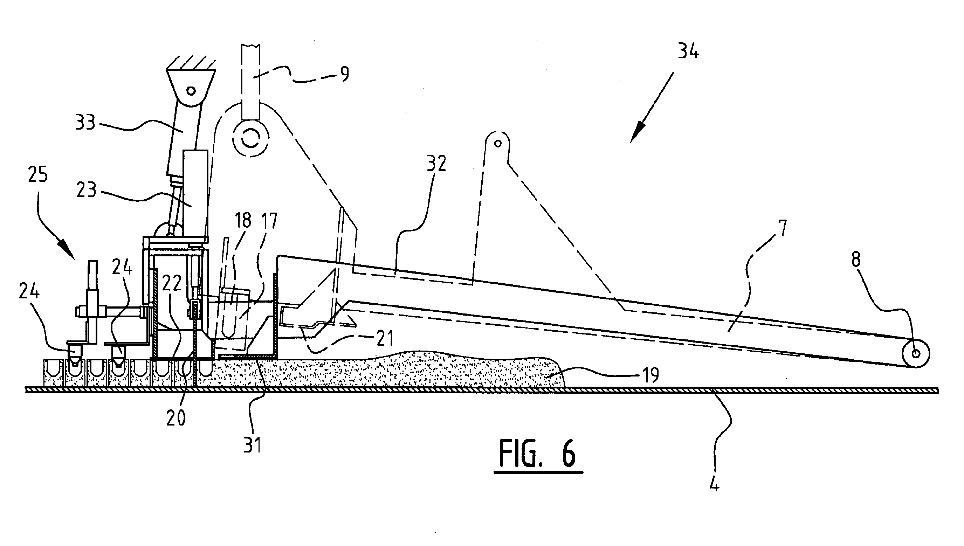

Fig. 6 shows an alternative embodiment of a device 34 according to the invention, wherein use is made of a pivot arm 32 as addition to U-frame 7. Pivot arm 32 is driven with an additional drive cylinder 33 and U-frame 7 with drive rod 9. Pivot arm 32 is pivotable about the same shaft 8 as U-frame 7. Short knives 17 and pins 18 there between are connected to U-frame 7, while the other active components as shown in fig. 2-5 are connected to pivot arm 32.

Operation is as follows.

Pivot arm 32 is first lowered onto the layer of potting compost 19. Having come down onto the top side of the layer of potting compost 19 with pre-tamping surface 21 or a leveling surface 31, cylinder 23 is actuated to urge the wide knife 20 perpendicularly into the layer of potting compost and thus make a cut. The movement of wide knife 20, which is as perpendicular as possible, contributes towards solving the problem of undesired layer formation in the press pots, since it causes hardly any loosening effect when knife 20 is pressed perpendicularly into the layer of potting compost 19 and retracted there from while the compost on the upper surface thereof is still being pressed downward. This is also a feature of the previous embodiments of fig. 2-5, though there substantially only in relation to the operation of the wide knife 20. Pivot arm 32 is then lowered and short knives 17 are pressed into the layer of potting compost. These then protrude through recesses in leveling surface 31. When U-frame 7 is subsequently moved upward again, short knives 17 are pulled out of the layer of potting compost 19 out of these recesses. The parts of the leveling surface 31 lying between the recesses hold in place the layer of potting compost there under with the cuts made by knives 17 therein. Prior thereto or thereafter the wide knife 20 is also retracted from the layer of potting compost, wherein post-tamping surface 22 holds the compost there under in place. Once U-frame 7 has been pulled upward by drive rod 9, pivot arm 32 with the wide knife therein is also retracted, pulled upward by means of cylinder 33.

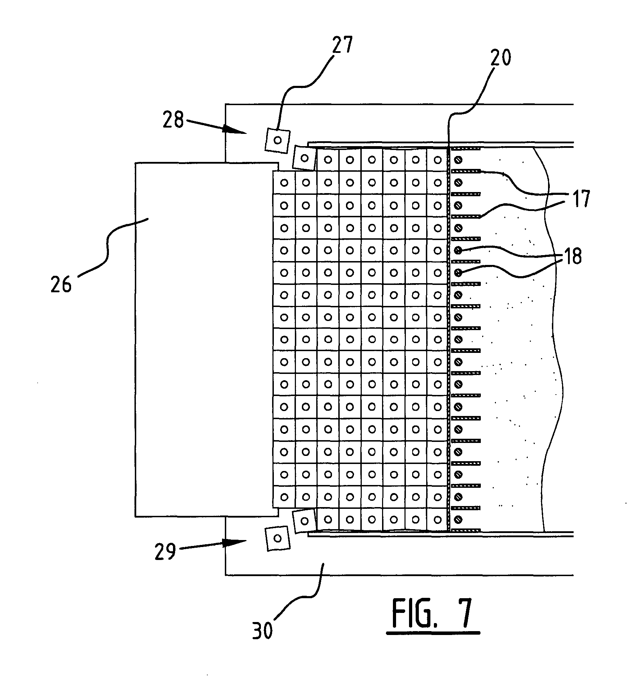

Fig. 7 shows that the composite knife 20, 17 has divided the tamped-down layer of potting compost 19 into press pots 27 in the above described manner. It is then further noted that two additional short knives 17 are provided and the long wide knife 20 corresponds to the combination of short knives 17 in order to create two rows of press pots extra to those required to fill a crate 26 with press pots. It has been found that the outer rows of press pots often lack quality and for this reason the extra rows of press pots 28, 29 are cut but, because of the known problems with quality, are dropped onto a return belt 30 which carries the press pots from rows 28, 29 back to feed 3 to enable reprocessing of the potting compost there from and so not allow any potting compost to be lost. Achieved at the same time is that only press pots 27 are placed in crate 26 which have a good quality known in advance in respect of the structure thereof. Disregarding the outer rows of press pots 28, 29 can prevent press pots particularly with a layered structure entering the crate or container 26. Not only are the outer rows of press pots 28, 29 disregarded, they are moreover returned for reuse so as to not allow any loss of potting compost.

Synchronized operation of the overall device 1 is one of the objects of the present invention, for which purpose the drive of the conveyor belt and those of short knives 17 and of the long wide knife 20 are adapted to each other, while only a single motor 10 still need be applied. Making the module 5 replaceable results in being able to adjust the dimensions of the press pots which can be cut or formed with device 1 by opting for another module with different intermediate distances between short knives 17 and/or optionally also different dimensions of the long knife 20. Although it is the intention to make the degree of filling of a crate as high as possible, this falls outside the scope of the present invention. The module is easily replaceable by releasing support points 15 from the module and by removing and replacing the module integrally with another module having different knives with different short or long intermediate spacings. Major intervention in the device is thus not necessary for alignment and synchronization thereof. It is only necessary to ensure a suitable transmission ratio of transmission 12 to enable transmission of the movement of motor 10 to conveyor belt 4 after replacement of a module 5 by another module 5 with different distances between knives 17 and/or 20. The alignment of the module itself is realized by a correct placing of suspension points 15 and corresponding points in frame 2.

After examination of the foregoing many alternative and additional embodiments, all lying within the scope of the present invention, will occur to the skilled person. These should all be deemed as embodiments of the invention, even though such additions and alternatives are not described explicitly here. It is thus possible to find solutions other than mechanical ones, with mechanical transmissions and rod constructions as described in the foregoing, for the purpose of synchronizing diverse components and parts of the device. It is further possible to make use of a further-reaching electronic control, although this will usually involve a plurality of motors. This is however not precluded from the scope of the present invention.

## Claims

1. Device for manufacturing press pots with potting compost, comprising:
- a feed (3) for providing a layer of potting compost;
- pressing means which act selectively on the layer of potting compost; and
- a knife (17, 20) for cutting the layer of potting compost into rows of pot forms (27),
wherein at least the pressing means and the knife are accommodated in a frame (2) together with a conveyor (4) which extends from the feed through the frame, and the pressing means and the knife are disposed at least at a position along the conveyor, and cut pot forms (27) are arranged into a container (26), which is provided for receiving the cut pot forms (27) therein,
**CHARACTERISED IN THAT**
at least the conveyor (4) and the knife (17, 20) are designed to supply and cut the layer of potting compost and have larger dimensions in the direction transversely of the conveyor (4) than the container (26),
the device further comprising a feedback from or from behind the knife, as seen in the direction of transport to the feed (3), for the purpose of renewed use at the feed of the potting compost forming part of at least one row (28, 29) outside of a size required to fill the container (26).

2. Device as claimed in claim 1, wherein the pressing means and the knife (17, 20) form a unit at a single position along the conveyor (4).

3. Device as claimed in claim 1 or 2, wherein gripping means connect to the conveyor (4) which can be selectively
set into operation and which grip and transfer the cut pot forms into the container (26) intended for this purpose.

4. Device as claimed in claim 3, further comprising a supply for providing empty containers at the gripping means; and a discharge for discharging containers filled with pot forms from the gripping means.

5. Device as claimed in at least one of the preceding claims, wherein the conveyor comprises a conveyor belt (4) trained in an endless loop round reversing wheels, wherein a drive motor (10) is coupled to a reversing wheel of the conveyor (4) the furthest removed from the feed (3).

6. Device as claimed in at least one of the preceding claims, in particular claim 5, wherein the drive motor (10) is connected, via a ratchet wheel (13) for stepwise advancing of the conveyor (4), to at least one of the reversing wheels of the conveyor, in particular the reversing wheel of the conveyor located furthest from the feed.

7. Device as claimed in at least one of the preceding claims, wherein the knife (17, 20) comprises longitudinal and transverse cutters to be selectively actuated, which in the actuated state form rows of press pots in the direction of transport of the conveyor (4).

8. Device as claimed in at least one of the preceding claims, wherein the larger dimensions of the knife (17, 20) correspond to the dimensions of at least one row (28, 29) of pot forms in the container (26).

9. Device as claimed in claim 8, wherein the larger dimensions of the knife (17, 20) correspond to at least two rows (28, 29), and the relevant rows lie outside either of the size of the container and the reach of gripping means for gripping cut pot forms and transferring thereof into the container (26).

10. Device as claimed in at least one of the preceding claims, wherein at least the knife (17, 20) is received in a cassette releasable from the frame (2).

11. Device as claimed in claim 10, wherein at least one of a number of cassettes can be arranged on the frame (2) by means of releasable couplings.

12. Device as claimed in claim 10 or 11, wherein at least the pressing means are also arranged in the cassette.

13. Device as claimed in at least one of the claims 10, 11 and 12, further comprising: a knife drive (23) for the knife (17, 20) which is associated via a releasable coupling with the knife.

14. Device as claimed in claim 13, wherein the knife drive (23) is mounted semi-permanently on the frame (2).

15. Device as claimed in claims 13 and 14, wherein a transmission is arranged between the knife and the knife drive with synchronizing means for adjusting the movements of the conveyor and the knife or knives relative to the potting compost.

## Patentansprüche

1. Vorrichtung zur Herstellung von Presstöpfen mit Blumenerde, umfassend:
- eine Zuführung (3) zur Bereitstellung einer Schicht aus Blumenerde;
- ein Druckmittel, das auf die Schicht der Blumenerde selektiv einwirkt;
- ein Messer (17, 20) zum Schneiden der Schicht der Blumenerde in Reihen von Topfformen (27),
wobei wenigstens das Druckmittel und das Messer in einem Rahmen (2) zusammen mit einer Fördereinrichtung (4) aufgenommen sind, die sich von der Zuführung durch den Rahmen erstreckt, und das Druckmittel und das Messer an mindestens einer Stelle entlang der Fördereinrichtung angeordnet sind, und geschnittene Topfformen (27) in einem Behälter (26) angeordnet sind, der zur Aufnahme der geschnittenen Topfformen (27) darin vorgesehen ist,
**dadurch gekennzeichnet,**
**dass** wenigstens die Fördereinrichtung (4) und das Messer (17, 20) konstruiert sind, um die Lage von Blumenerde zuzuführen und zu schneiden und größere Abmessungen in der Richtung quer zu der Fördereinrichtung (4) als der Behälter (26) zu haben,
wobei die Vorrichtung weiterhin eine Rückführung von dem Messer oder von hinter dem Messer aufweist, wenn es in der Richtung des Transports zu der Zuführung (3) betrachtet wird, zum Zwecke der erneuten Verwendung auf der Zuführseite der Blumenerde, die einen Teil wenigstens einer Reihe (28, 29) außerhalb einer Größe bildet, die erforderlich ist um den Behälter (26) zu füllen.

2. Vorrichtung wie in Anspruch 1 beansprucht, wobei das Druckmittel und das Messer (17, 20) eine Einheit an einer einzelnen Stelle entlang der Fördereinrichtung (4) bilden.

3. Vorrichtung wie in Anspruch 1 oder 2 beansprucht, wobei Greifmittel, die selektiv in Betrieb genommen werden und die die geschnittenen Topfformen greifen und in den Behälter (26), der zu diesem Zweck vorgesehen ist, transferieren, mit der Fördereinrichtung (4) verbunden sind.

4. Vorrichtung wie in Anspruch 3 beansprucht, weiterhin aufweisend eine Zuführung zum Vorhalten leerer Behälter an den Greifmitteln;
und eine Entladung zum Entladen der mit Topfformen gefüllten Behälter von den Greifmitteln.

5. Vorrichtung wie in wenigstens einem der vorrangegangenen Ansprüchen beansprucht, wobei die Fördereinrichtung einen Fördergurt (4) aufweist, der in einer endlosen Schleife um Umkehrräder ausgebildet ist, wobei ein Antriebsmotor (10) mit einem Umkehrrad der Fördereinrichtung (4) verbunden ist, das am weitesten entfernt von der Zuführung (3) ist.

6. Vorrichtung wie in wenigstens einem der vorangegangenen Ansprüchen beansprucht, insbesondere Anspruch 5, wobei der Antriebsmotor (10) über ein Sperrrad (13) zum schrittweisen Vorrücken der Fördereinrichtung (4) mit wenigstens einem der Umkehrräder der Fördereinrichtung verbunden ist, insbesondere dem Umkehrrad der Fördereinrichtung, das am weitesten von der Zuführung entfernt angeordnet ist.

7. Vorrichtung wie in einem der vorangegangenen Ansprüchen beansprucht, wobei das Messer (17, 20) Längs- und Querschneiden aufweist, die wahlweise angetrieben werden können, wobei diese in einem angetriebenen Zustand Reihen von Presstöpfen in der Förderrichtung der Fördereinrichtung (4) bilden.

8. Vorrichtung wie in einem der vorangegangenen Ansprüche beansprucht, wobei die größeren Abmessungen des Messers (17, 20) den Abmessungen wenigstens einer Reihe (28, 29) von Topfformen in dem Behälter (26) entsprechen.

9. Vorrichtung wie in Anspruch 8 beansprucht, wobei die größeren Abmessungen des Messers (17, 20) wenigstens zwei Reihen (28, 29) entsprechen und die maßgeblichen Reihen außerhalb der Größe des Behälters und der Reichweite der Greifmittel zum Greifen der geschnittenen Topfformen und zum Transferieren dieser in den Container (26) liegen.

10. Vorrichtung wie in einem der vorangegangenen Ansprüchen, wobei wenigstens das Messer (17, 20) in einer Kassette aufgenommen ist, die von dem Rahmen (2) lösbar ist.

11. Vorrichtung wie in Anspruch 10 beansprucht, wobei wenigstens eine einer Anzahl von Kassetten auf dem Rahmen (2) durch Mittel von lösbaren Verbindungen angeordnet werden kann.

12. Vorrichtung wie in Anspruch 10 oder 11 beansprucht, wobei wenigstens die Druckmittel ebenfalls in der Kassette angeordnet sind.

13. Vorrichtung wie in wenigstens einem der Ansprüche 10, 11 und 12 beansprucht, weiterhin aufweisend:
einen Messerantrieb (23) für das Messer (17, 20) welches über eine lösbare Verbindung mit dem Messer verknüpft ist.

14. Vorrichtung wie in Anspruch 13 beansprucht, wobei der Messerantrieb (23) halb dauerhaft auf dem Rahmen (2) montiert ist.

15. Vorrichtung wie in Ansprüchen 13 und 14 beansprucht, wobei eine Übertragung zwischen dem Messer und dem Messerantrieb angeordnet ist, mit Synchronisationsmitteln zum Anpassen der Bewegung der Fördereinrichtung des Messers oder der Messer relativ zu der Blumenerde.

## Revendications

1. Dispositif pour la fabrication de pots compresseurs de terreau comprenant :
une alimentation (3) pour fournir une couche de terreau ;
des moyens de compression qui agissent sélectivement sur la couche de terreau ; et
un couteau (17, 20) pour couper la couche de terreau en rangées de formes de pot (27),
dans lequel au moins les moyens de compression et le couteau sont logés dans un bâti (2) ensemble avec un transporteur (4) qui s'étend à partir de l'alimentation à travers le bâti, et les moyens de compression et le couteau sont disposés au moins à une position le long du transporteur, et des formes de pot coupées (27) sont agencées dans un récipient (26) qui est prévu pour recevoir les formes de pot coupées (27) à l'intérieur de ce dernier,
**caractérisé en ce que** :
au moins le transporteur (4) et le couteau (17, 20) sont conçus pour fournir et couper la couche de terreau et ont des dimensions dans la direction transversale au transporteur (4) plus grandes que le récipient (26),
le dispositif comprenant en outre un retour d'alimentation depuis le ou depuis l'arrière du couteau, vu dans la direction de transport jusqu'à l'alimentation (3) dans le but d'une utilisation renouvelée au niveau de l'alimentation du terreau faisant partie d'au moins une rangée (28, 29) différente d'une taille nécessaire pour remplir le récipient (26).

2. Dispositif selon la revendication 1, dans lequel les moyens de compression et le couteau (17, 20) forment une unité à une seule position le long du transporteur (4).

3. Dispositif selon la revendication 1 ou 2, dans lequel des moyens de préhension se raccordent au transporteur (4) qui peut être sélectivement mis en fonctionnement et qui saisissent et transfèrent les formes de pot coupées jusque dans le récipient (26) prévu à cet effet.

4. Dispositif selon la revendication 3, comprenant en outre un approvisionnement pour fournir des récipients vides aux moyens de préhension ; et une décharge pour décharger les récipients remplis avec des formes de pot à partir des moyens de préhension.

5. Dispositif selon l'une au moins des revendications précédentes, dans lequel le transporteur comprend une courroie transporteuse (4) entraînée dans une boucle sans fin autour de roues d'inversion, dans lequel un moteur d'entraînement (10) est couplé à une roue d'inversion du transporteur (4) la plus éloignée de l'alimentation (3).

6. Dispositif selon l'une au moins des revendications précédentes, en particulier selon la revendication 5, dans lequel le moteur d'entraînement (10) est raccordé, via une roue à rochet (13) pour l'avancement pas à pas du transporteur (4), à au moins l'une des roues d'inversion du transporteur, en particulier la roue d'inversion du transporteur la plus éloignée de l'alimentation.

7. Dispositif selon l'une au moins des revendications précédentes, dans lequel le couteau (17, 20) comprend des dispositifs de coupe longitudinaux et transversaux à actionner sélectivement qui, à l'état actionné, forment des rangées de pots compresseurs dans la direction de transport du transporteur (4).

8. Dispositif selon l'une au moins des revendications précédentes, dans lequel les plus grandes dimensions du couteau (17, 20) correspondent aux dimensions d'au moins une rangée (28, 29) de formes de pot dans le récipient (26).

9. Dispositif selon la revendication 8, dans lequel les plus grandes dimensions du couteau (17, 20) correspondent à au moins deux rangées (28, 29), et les rangées concernées sont différentes chacune de la taille du récipient et de l'atteinte des moyens de préhension pour saisir les formes de pot coupées et les transférer dans le récipient (26).

10. Dispositif selon l'une au moins des revendications précédentes, dans lequel au moins le couteau (17, 20) est reçu dans une cassette amovible du bâti (2).

11. Dispositif selon la revendication 10, dans lequel au moins une cassette d'un certain nombre de cassettes peut être agencée sur le bâti (2) au moyen de couplages amovibles.

12. Dispositif selon la revendication 10 ou 11, dans lequel au moins les moyens de compression sont également agencés dans la cassette.

13. Dispositif selon l'une au moins des revendications 10, 11 et 12, comprenant en outre : un entraînement de couteau (23) pour le couteau (17, 20) qui est associé, via un couplage amovible, avec le couteau.

14. Dispositif selon la revendication 13, dans lequel l'entraînement de couteau (23) est monté de manière semi-permanente sur le bâti (2).

15. Dispositif selon les revendications 13 et 14, dans lequel une transmission est agencée entre le couteau et l'entraînement de couteau avec des moyens de synchronisation pour ajuster les mouvements du transporteur et du couteau ou des couteaux par rapport au terreau.
